# EUROPÄISCHE PATENTSCHRIFT

(11) **EP 2 789 449 B1**
(45) Veröffentlichungstag und Bekanntmachung des Hinweises auf die Patenterteilung: **13.09.2017**
(21) Anmeldenummer: 14162607.7
(22) Anmeldetag: 31.03.2014
(51) Int. Cl.: B29C 65/02, B29C 65/78, B32B 7/12, B32B 27/36, B65B 7/16, B65B 51/14, C09J 7/02, C09J 5/06, B29C 65/18, B29C 65/08, B29C 65/36, B32B 7/06, B65B 29/02, B65B 51/22

(54) **Verfahren zum Versiegeln der Öffnung eines Bauteils, Trägerfolie mit Siegelmembran und Versiegelungsvorrichtung**
Method for sealing an aperture in a component, substrate film with a sealing membrane and sealing device
Procédé de scellement d'une ouverture d'un élément de construction, feuille de support dotée d'une membrane de scellement et dispositif de scellement

(30) Priorität: 11.04.2013 DE 102013103661
(43) Veröffentlichungstag der Anmeldung: 15.10.2014
(73) Patentinhaber: Gerresheimer Regensburg GmbH, 93047 Regensburg (DE)
(72) Erfinder: Billing, Florian, 92421 Schwandorf (DE); Friedrich, Jürgen, 92224 Amberg (DE)
(74) Vertreter: Hannke, Christian

(56) Entgegenhaltungen:
- DE-A1- 1 411 995
- DE-A1- 19 654 373
- US-A- 3 434 902
- US-A1- 2012 117 925

## Beschreibung

Die Erfindung betrifft ein Verfahren zum Versiegeln einer Öffnung eines Bauteils, eine Trägerfolie nach dem Oberbegriff des Patentanspruchs 6 sowie eine Versiegelungsvorrichtung nach dem Oberbegriff des Patentanspruchs 12.

Eine derartiges Verfahren und eine derartige Trägerfolie sind beispielsweise aus der US 5,860,544 A bekannt. Solche Trägerfolien werden dazu benutzt, Öffnungen von Behältnissen zu verschließen, welche beispielsweise Lebensmittel oder Pharmazeutika enthalten. Auf der Trägerfolie ist dabei eine Siegelmembran angeordnet, welche an den Rand einer Öffnung eines derartigen Behältnisses ansiegelbar ist. Derartige Siegelmembranen sind vielfach bekannt. Sie dienen als Originalverschluss, der gewährleistet, dass der Behälterinhalt nach seiner ursprünglichen Füllung und dem Aufbringen der Siegelmembran unverändert geblieben ist. Sie dienen aber auch als aromadichter Verschluss, insbesondere, wenn das Füllgut ein aromahaltiges Gut, wie es beispielsweise bei Lebensmitteln, wie beispielsweise Kaffee, Tee od. dgl., der Fall ist, darstellt. Die Aufsiegelung solcher Siegelmembranen auf den Rand der Behälteröffnung kann entweder durch Anwendung von Druck oder Wärme erfolgen. Bei dem Verfahren der US 5,860,544 A teilt sich beim Lösen der Siegelmembran von der Trägerfolie eine Schicht. Die Herstellung einer solchen teilbaren Schicht ist allerdings technisch aufwendig sowie zeit- und kostenintensiv.

Es ist aber auch bekannt, die Siegelmembran von der Trägerfolie beispielsweise mittels einer Spenderklammer zu entnehmen. Bei diesem Entnahmevorgang besteht das Problem, dass die Siegelmembran oftmals verknickt, so dass eine weitere Verarbeitung dieser Siegelmembran nur bedingt möglich ist. Außerdem kann die von der Folie entnommene Siegelmembran nur sehr schlecht auf der zu versiegelnden Behälteröffnung positioniert werden, da dabei Toleranzen von weniger als einem Zehntel Millimeter eingehalten werden müssen, damit eine sichere Versiegelung erfolgen kann. Dieser Schritt der Siegelmembranentnahme von der Trägerfolie und dem Positionieren der Siegelmembran auf der Behälteröffnung sowie dem anschließenden Versiegeln ist sehr zeit- und damit kostenintensiv.

Aus der US 3 434 902 A) ist eine Vorrichtung zum Übertragen von einem lösbar an einem Trägerband angeordneten Heißsiegeletikett auf Gegenstände bekannt. Die Papieretiketten werden durch eine Wachsschicht auf einem Papierträgerband gehalten und weisen auf ihren dem Trägerband abgewandten Flächen eine durch Wärmezufuhr aktivierbare Klebeschicht auf. Ein Etikett wird über Führungsrollen dem entsprechenden zu beklebenden Gegenstand zugeführt. Beim Anlegen an die Etikettenaufnahmefläche wird eine entsprechende Bandlänge über einen Mechanismus zugeführt. Somit wird das Etikett registergenau an die vorgesehene Stelle angelegt. Nach dem Anlegen wird das Etikett mittels eines rollenförmigen Andrückelements oder eines Heizschuhs auf den Gegenstand angebracht. Durch die Wärme wird die Klebeschicht aktiviert, ferner schmilzt die Wachsschicht und gibt somit das Etikett frei.

Die US 2012 / 0117925 A1 offenbart ein Verfahren, um gefertigte Chip-Komponenten abzupacken. Die Komponenten werden in einer Aufnahme abgelegt, welche einer Versiegelungsvorrichtung zugeführt werden. In der Versiegelungsvorrichtung werden die Aufnahmen mit Siegelfolien versiegelt. Die Siegelfolien werden dabei mittels eines Trägerbands zugeführt. Das Trägerband kreuzt die Führung der Aufnahmen, wodurch eine Siegelfolie über einer Aufnahme positionierbar ist. Das Aufsiegeln der Siegelfolie erfolgt über einen entsprechenden Stempel.

Aus der DE 196 54 373 A1) ist eine Vorrichtung zum Aufsiegeln von Deckeln auf Packungen bekannt. Die Deckel werden der Vorrichtung in Form eines Deckelbandes zu-geführt, in welchem die Deckel teilweise ausgestanzt und im Übrigen über Haltestege lösbar im Abstand hintereinander angebracht sind. Die Packungen werden einer Siegelstation der Vorrichtung mittels einer Transporteinrichtung zugeführt. Die Transportrichtung der Deckel ist dabei quer zu der Transportrichtung der Packungen. Ferner ist im Deckelband eine Mehrzahl von Transportlöchern in Form von Dreiergruppen angeordnet. Die Vorrichtung umfasst weiterhin eine Photozelle, mittels welcher eine Positionierung des Deckelbandes anhand der Transportlöcher feststellbar ist. Nachdem die Deckel über den Packungen positioniert sind, wird ieweils ein Siegelkopf aufgesetzt und die Siegelung wird begonnen. Noch während der Siegelung wird das Deckelband vertikal nach oben bewegt, wodurch die Deckel aus dem Deckelband herausgerissen werden.

Ferner zeigt die DE 14 11 995 A1 ein Verpackungssystem für Einzelbehälter Die einzelnen Behälter werden dabei in einer Trägerplatte angeordnet und danach befüllt. Anschließend wird ein Abdeckmaterial in Form einer Platte oder in Form einer kontinuierlichen Bahn mittels einer Walze aufgebracht. Das Aufsiegeln des Abdeckmaterials erfordert die Verwendung eines Materials, das selbstklebend oder durch ein mittels Druck und Hitze aktivierbares Material ist. Gemäß einer Ausführungsform sind an der Trägerplatte Registerstifte angeordnet, welche in entsprechende Registerlöcher der Trägerplatte eingreifen.

Es ist daher Aufgabe der Erfindung, ein derartiges Verfahren und eine Trägerfolie mit den Merkmalen des Oberbegriffs des Patentanspruchs 6 derart weiterzubilden, dass das Handling der Trägerfolie und der Siegelmembran beim Versiegeln eines Behältnisses erleichtert und somit der Versiegelungsprozess schnell und kostengünstig und gegebenenfalls automatisiert durchgeführt werden kann. Ferner ist es Aufgabe der Erfindung, eine Vorrichtung zum Verarbeiten einer solchen Trägerfolie zur Verfügung zu stellen, die ein einfaches Handling und einen automatisierten Versiegelungsprozess zur Verfügung stellt.

Hinsichtlich des Verfahrens wird diese Aufgabe durch ein Verfahren mit allen Merkmalen des Patentanspruchs 1 gelöst. Hinsichtlich der Trägerfolie wird diese Aufgabe durch eine Trägerfolie mit allen Merkmalen des Patentanspruchs 6 gelöst. Hinsichtlich der Versiegelungsvorrichtung wird die Aufgabe durch eine Versiegelungsvorrichtung mit allen Merkmalen des Patentanspruchs 12 gelöst. Vorteilhafte Ausgestaltungen der Erfindung finden sich in den Unteransprüchen.
Das erfindungsgemäße Verfahren zum Versiegeln einer Öffnung eines Bauteils mit einer von einer Trägerfolie lösbaren Siegelmembran zeichnet sich durch folgende Verfahrensschritte aus:
a) Verfahren der Trägerfolie über die Öffnung des Bauteils, so dass die Siegelmembran über der Öffnung positioniert ist, wobei die Trägerfolie (10) Positionierungselemente (11) aufweist welche zu entsprechenden Gegenpositionierungselementen (210) einer Versiegelungsvorrichtung (200) korrespondieren und durch welche die Trägerfolie (10) in der Versiegelungsvorrichtung (200) exakt zu der Öffnung (110) positionierbar ist,
b) Andrücken der Siegelmembran auf den Rand der Öffnung,
c) Energieeintrag in die Trägerfolie und die Siegelmembran,
d) Desorbieren eines zwischen der Trägerfolie und der Siegelmembran angeordneten Haftmittels,
e) Verschmelzen eines Siegellackes der Siegelmembran mit dem Rand der Öffnung des Bauteils und
f) Entfernen der Trägerfolie von der Öffnung des Bauteils.

Durch diese Verfahrensschritte, insbesondere durch den Verfahrensschritt des Desorbierens des zwischen der Trägerfolie und der Siegelmembran angeordneten Haftmittels ist gewährleistet, dass sich die Trägerfolie nach dem Versiegeln der Öffnung des Bauteils ohne zusätzliche Hilfsmittel oder Werkzeuge von der aufgesiegelten Siegelmembran löst, da zwischen Trägerfolie und Siegelmembran aufgrund des desorbierten Haftmittels keine Haftverbindung mehr besteht. Insofern erfolgt das Versiegeln der Öffnung des Bauteils effizienter, da weder zusätzliche Arbeitsschritte noch Werkzeuge zum Lösen der Siegelmembran von der Trägerfolie notwendig sind und somit auch keine Verletzungen der Siegelmembran durch derartige Hilfsmittel oder Werkzeuge auftreten können, welche das versiegelte Bauteil unbrauchbar machen könnten. Durch diese Maßnahme sind auch Ausschüsse beziehungsweise Fehlproduktionen beim Versiegeln von Bauteilen wirkungsvoll vermieden.

Dabei hat es sich als vorteilhaft erwiesen, wenn der Energieeintrag über maximal 10 Sekunden erfolgt. Hierdurch ist eine sinnvolle schnelle Taktung erreicht, so dass bei einer Vielzahl von Bauteilen die Öffnung innerhalb kurzer Zeit versiegelt werden kann.

Nach einer vorteilhaften Ausgestaltung der Erfindung erfolgt der Energieeintrag mittels einer Heizeinrichtung, welche vorzugsweise konduktiv oder induktiv oder mit Ultraschall arbeitet. Alternativ kann es natürlich auch vorgesehen sein, die Heizeinrichtung induktiv beziehungsweise konduktiv arbeiten zu lassen. Der Energieeintrag mittels der Heizvorrichtung ist in vielfachen Anwendungen bereits erprobt und kann somit effizient, kostengünstig und sehr exakt durchgeführt werden.

Vorzugsweise erfolgt der Energieeintrag dabei mittels eines Versiegelungsstempels, mit welchem die Siegelmembran auf den Rand der Öffnung des Bauteils anpressbar ist. Hierdurch ist gewährleistet, dass die Siegelmembran exakt über der Öffnung des Bauteils positioniert ist und somit diese Öffnung auch exakt versiegelt wird. Durch diese Maßnahme werden abermals Ausschüsse beziehungsweise Fehlproduktionen beim Versiegeln von Bauteilen vermieden.

Gemäß einem weiteren Aspekt der Erfindung erfolgt der Energieeintrag derart, dass das zwischen Trägerfolie und Siegelmembran angeordnete Haftmittel desorbiert, während der Siegellack der Siegelmembran mit dem Rand der Öffnung des Bauteils verschmilzt. Hierdurch ist eine Zeitersparnis gegeben, da durch den Energieeintrag gleichzeitig sowohl das Desorbieren des Haftmittels als auch das Verschmelzen des Siegellacks der Siegelmembran mit dem Rand der Öffnung durchgeführt wird.

Die erfindungsgemäße Trägerfolie enthält wenigstens eine Siegelmembran, mit welcher eine Öffnung eines Bauteils versiegelbar ist. Die Siegelmembran ist dabei mittels eines oberhalb einer Temperatur von 332 K desorbierenden Haftmittels mit der Trägerfolie verbunden. Die Trägerfolie weist weiterhin Positionierungselemente auf, welche zu entsprechenden Geltenpositionierungselementen einer Versiegelungsvorrichtung korrespondieren und durch welche die Trägerfolie in der Versiegelungsvorrichtung exakt zu der Öffnung positionierbar ist. Durch ein solches Haftmittel ist gewährleistet, dass sich die Siegelmembran während des Schweißvorgangs von der Trägerfolie löst, da das Haftmittel durch die Temperatureinwirkung vollständig desorbiert und somit keine Haftung zwischen Trägerfolie und Siegelmembran mehr vorliegt. Insbesondere sind keine zusätzlichen Verfahrensschritte oder Werkzeuge notwendig, um die Siegelmembran nach dem Schweißvorgang von der Trägerfolie zu lösen. Die Trägerfolie ist nach dem Schweißvorgang einfach von der nunmehr die Öffnung des Bauteils verschließenden Siegelmembran lösbar, indem sie davon wegbewegt wird, wobei keine Haftung zwischen Trägerfolie und Siegelmembran mehr besteht.

Dabei hat es sich als vorteilhaft erwiesen, als Haftmittel einen drucksensitiven Kleber, insbesondere einen Kleber auf Acryl- oder Elastomerbasis, zu verwenden.

Nach einem anderen Gedanken der Erfindung weist die wenigstens eine Siegelmembran eine Membranschicht und eine Siegelschicht auf. Diese Anforderungen an die Siegelmembran sind Minimalanforderungen, da die Siegelschicht zum Versiegeln der Siegelmembran auf dem Rand der Öffnung des Bauteils notwendig ist und die Membranschicht die anschließende gas- und/oder dampfdichte Versiegelung sicherstellt.

Vorteilhafter ist es aber, die Siegelmembran aus mehreren Schichten aufzubauen, welche mittels eines zwischen den Schichten eingebrachten Permanentklebstoffes zu der Siegelmembran verklebt sind.

Auch bei diesem Permanentklebstoff hat es sich als sinnvoll erwiesen, einen Kleber auf Acryl- oder Elastomerbasis zu verwenden. Allerdings weist dieser Permanentklebstoff andere thermische Eigenschaften auf als das zwischen Trägerfolie und Siegelmembran angeordnete Haftmittel. Dieser Permanentklebstoff darf nämlich nicht während des Versiegelungsprozesses desorbieren. Vielmehr muss er den beim Verschweißen der Öffnung des Behälters auftretenden Temperaturen Stand halten, da eine sichere Verklebung der einzelnen Schichten der Siegelmembran auch bei den beim Verschweißen auftretenden Temperaturen gewährleistet sein muss. Solche Permanentklebstoffe auf Acryl- oder Elastomerbasis sind aber weit verbreitet, so dass aus verschiedenen Möglichkeiten ausgewählt werden kann. Die Siegelmembran weist als verschiedene Schichten beispielsweise eine Membranschicht, eine Siegelschicht, eine farbgebende Schicht und eine abschließende Kunststoffschicht auf. Die Membranschicht besteht dabei vorzugsweise aus Aluminium, da eine solche Aluminiumfolie im Wesentlichen gas- und dampfdicht ist. Die Siegelschicht besteht vorteilhafterweise aus einem auf Polyolefinen basierenden Siegellack, insbesondere auf LLDP (Linear-Low-Density Polyethylen). Die farbgebende Schicht besteht vorzugsweise aus Polypropylen, welches in unterschiedlichen Farben zur Verfügung steht bzw. eingefärbt werden kann. Die abschließende zur Trägerfolie hinweisende Kunststoffschicht besteht vorteilhafterweise aus einem Polyester, vorzugsweise aus PET. Eine solche PET Schicht lässt sich besonders einfach mittels des Haftmittels mit einer aus PET bestehenden Trägerfolie verbinden, da das Haftmittel dann sowohl gegenüber der Trägerfolie als auch der Siegelmembran gleiche Hafteigenschaften auffindet.

Nach einem anderen Gedanken der Erfindung weist die Trägerfolie dabei Positionierungselemente auf, welche zu entsprechenden Gegenpositionierungselementen einer Versiegelungsvorrichtung korrespondieren und durch welche die Trägerfolie in der Versiegelungsvorrichtung zum Versiegeln der Öffnung des Bauteils mittels der Siegelmembran exakt zu der Öffnung positionierbar ist. Durch die Positionierungselemente der Trägerfolie ist gewährleistet, dass die Siegelmembran zum Versiegeln der Öffnung des Bauteils exakt in der gewünschten Position über der Öffnung des Bauteils in einer Versiegelungsvorrichtung positionierbar ist. Jeder auf der Trägerfolie aufgebrachten Siegelmembran ist dabei wenigstens ein solches Positionierungselement zugeordnet. Sofern dieses Positionierungselement die entsprechende Geometrie aufweist, ist damit eine exakte Positionierung der Siegelmembran über der Öffnung des Behältnisses möglich, da die Geometrie des Positionierungselementes mit der Geometrie eines Gegenpositionierungselementes einer Versiegelungseinrichtung korrespondiert. Sobald diese beiden Positionierungselemente ineinander greifen, ist die auf der Trägerfolie angeordnete Siegelmembran exakt über der Öffnung des Bauteils positioniert, so dass anschließend der Versiegelungsprozess durchgeführt werden kann.

Dabei hat es sich als vorteilhaft erwiesen, dass die Trägerfolie aus einem Metall oder einem Kunststoff, insbesondere aus einem Elastomer bevorzugt aus Polyester, besonders bevorzugt auch aus PET, besteht und eine Dicke zwischen 10 µm und 110 µm, insbesondere zwischen 35 µm und 85 µm, bevorzugt von 60 µm aufweist. Durch Folien mit einer solchen Dicke ist gewährleistet, dass die Wärme bei einem Versiegelungsprozess durch die Trägerfolie in ausreichendem Maß weitergeleitet wird, damit eine sichere und gas- und/oder dampfundurchlässige Verbindung zwischen dem Rand der Öffnung des Bauteils und der Siegelmembran mittels Verschweißen durch Hitze hergestellt werden kann.

Die Trägerfolie ist dabei derart ausgelegt, dass sie eine Dauergebrauchstemperatur von wenigsten 322 K, bevorzugt von wenigstens 422 K Stand hält. Die Dauergebrauchstemperatur ist dabei definiert als die maximale Temperatur, bei der Kunststoffe in heißer Luft nach 20000 Stunden Lagerung (nach IEC 216) nicht mehr als 50% ihrer Ausgangseigenschaften verloren haben.

Die Kurzzeit-Gebrauchstemperatur der erfindungsgemäßen Trägerfolie beträgt dabei bis zu 442 K, bevorzugt aber über 422 K. Die Kurzzeit-Gebrauchstemperatur ist dabei die Kurzzeit-Spitzentemperatur, die der Kunststoff in einem geringen Zeitraum unter Berücksichtigung der Belastungshöhe und -dauer ertragen kann, ohne geschädigt zu werden. Die maximale Gebrauchstemperatur ist dabei von der Dauer der Temperatureinwirkung, der maximal zulässigen Deformation, dem Abbau von Festigkeitseigenschaften infolge thermischer Oxidation und weiteren Umgebungsbedingungen abhängig. Da bei einem Versiegelungsprozess einer Öffnung eines Bauteils der Schweißvorgang nur wenige Sekundenbruchteile dauert, ist die Dauer der Temperatureinwirkung nur relativ kurz. Die nötige Siegeltemperatur beziehungsweise Grundschweißtemperatur für die zu fügenden Materialien sollte dabei aber nicht über der Kurzzeit-Gebrauchstemperatur der Trägerfolie liegen, am besten aber auch nicht über der Langzeit-Temperaturbeständigkeit.

Grundsätzlich ist zum Verschließen der Öffnung des Bauteils ein Siegellack vorgesehen, wobei der Siegellack während des Schweißvorgangs auf den Rand der Öffnung des Bauteils an- oder sogar aufschließt. Das Bauteil selbst sollte dabei nicht wesentlich aufschmelzen, da es sich sonst verzieht. Es sollte aber gut erwärmt sein, damit sich die Polymerketten verbinden können. Bei einem aus Cyclo-Olefin-Copolymeren (COC) hergestellten Bauteil ist es sinnvoll, dieses auf ca. 372 - 403 K zu erwärmen, wobei ein aus LLDP (Linear-Low-Density Polyethen) gebildeter Siegellack aufschmilzt. Um diese Temperaturen während des Schweißvorgangs zu erzielen, hat es sich als sinnvoll erwiesen, einen Siegelstempel zum konstruktiven Schweißen auf eine Temperatur zwischen 422 und 442 K zu erwärmen.

Nach einem anderen Gedanken der Erfindung ist die Trägerfolie als ein längliches Band ausgebildet, auf dem eine Vielzahl von Siegelmembranen, vorzugsweise in äquidistantem Abstand, angeordnet ist. Bei einem solchen Band können auch die Positionierungselemente als kreisförmige Öffnungen auf der Trägerfolie, vorzugsweise ebenfalls in einem äquidistanten Abstand angeordnet werden. Hierdurch ist es möglich, eine als ein solches längliches Band ausgebildete Trägerfolie permanent, vorzugsweise motorisch angetrieben durch eine entsprechende Versiegelungsvorrichtung zu führen. Dabei greifen Gegenpositionierungselemente der Versiegelungsvorrichtung, welche vorzugsweise als Stifte ausgebildet sind, die zu den als Öffnungen ausgebildeten Positionierungselementen der Trägerfolie korrespondieren, in diese Öffnungen ein, so dass aufgrund der gleichen Distanzen zwischen den Positionierungselementen beziehungsweise den Siegelmembranen auf der Trägerfolie, die Siegelmembranen exakt positioniert werden können, so dass sie in der gewünschten Position auf einen Rand einer Öffnung eines Bauteils, welches in einer Werkstückaufnahme der Versiegelungseinrichtung positioniert ist, aufgebracht werden können.

Als vorteilhaft hat sich dabei erwiesen, wenn eine als längliches Band ausgebildete Trägerfolie auf einer Spindel aufgewickelt ist.

Die erfindungsgemäße Versieglungsvorrichtung zum Versiegeln wenigstens einer Öffnung eines Bauteils, von der eine erfindungsgemäße Trägerfolie wie zuvor beschrieben verarbeitbar ist, weist dabei Folgendes auf: eine Werkstückaufnahme für Bauteile, eine Zuführung für die Trägerfolie, Gegenpositionierungselemente, welche zu Positionierungselementen der Trägerfolie korrespondieren, wodurch die Trägerfolie in der Versiegelungsvorrichtung exakt zu der Öffnung positionierbar ist einen Versiegelungsstempel, durch welchen eine auf der Trägerfolie angeordnete Siegelmembran auf einen Rand einer Öffnung eines Bauteils zum Versiegeln der Öffnung anordnenbar ist, einer dem Versiegelungsstempel zugeordnete Heizeinrichtung, mittels welcher die Trägerfolie aufheizbar ist, wobei der Zuführung für die Trägerfolie eine Anpresseinrichtunct zugeordnet ist, mit welcher die Positionierunqselemente der Trägerfolie in oder an den Gegenpositionierungselementen anordenbar sind.
Durch eine solche Versiegelungsvorrichtung ist es möglich, die zuvor beschriebene erfindungsgemäße Trägerfolie automatisiert der Werkstückaufnahme zuzuführen, so dass ein wiederholbar exaktes Versiegeln von Bauteilen mit Siegelmembranen automatisiert durchführbar ist.
Dabei weist die Versiegelungsvorrichtung vorteilhafterweise eine Grundplatte auf, auf welcher eine Hubeinrichtung angeordnet ist. Der Hubeinrichtung ist dabei ein Hubtisch, eine Hubtischführung und ein Hubzylinder zugeordnet, wobei der Hubzylinder dazu ausgebildet ist, mit dem an der Unterseite des Hubtisches angeordneten Versiegelungsstempel, die Trägerfolie mit einer Siegelmembran auf eine Öffnung eines in der Werkstückaufnahme positionierten Bauteils zu drücken. Der Zuführung für die Trägerfolie ist nach der Erfindung eine Anpresseinrichtung zugeordnet, mit welcher die Positionierungselemente der Trägerfolie in bzw. an den Gegenpositionierungselementen anordnenbar sind. Durch diese Anpresseinrichtung wird für jede auf der Trägerfolie angeordnete Siegelmembran eine exakte Positionierung der Siegelmembran oberhalb der Öffnung des Bauteils, welches in der Werkstückaufnahme der Versiegelungseinrichtung angeordnet ist, erreicht, so dass die Siegelmembran auf den Rand der Öffnung des Bauteils exakt aufgesiegelt werden kann. Die Anpresseinrichtung weist dabei vor und nach der Werkstückaufnahme Anpressrollen auf, welche die Trägerfolie, die beim Fortbewegen in der Zuführung oberhalb der als Stifte ausgebildeten und auf den Hubtisch angeordneten Gegenpositionierungselementen führt, in Richtung des Hubtisches drückt, so dass die als Stifte ausgebildeten Gegenpositionierungselemente der Versiegelungsvorrichtung in die Positionierungselemente der Trägerfolie eingreifen und somit die Siegelmembran exakt oberhalb der Öffnung des Bauteils, welches in der Werkstückaufnahme aufgenommen ist, positionieren.
Vorteilhafterweise weist die Versiegelungseinrichtung auch eine Abwickeleinrichtung auf, auf welcher eine Spindel mit einem Band der Trägerfolie anordnenbar ist. Vorteilhafterweise ist diese Abwickeleinrichtung auch motorisch antreibbar, so dass der gesamte Versiegelungsprozess automatisiert ablaufen kann, sobald eine Spindel mit einem Band der Trägerfolie in der Abwickeleinrichtung aufgenommen ist. Gegebenenfalls kann die Trägerfolie, nachdem die Siegelmembranen auf die entsprechenden Bauteile aufgesiegelt wurden, auf einer Aufwickeleinrichtung auf einer Spindel wieder aufgerollt werden, so dass sie gegebenenfalls wieder oder weiter verwendbar ist.
Die Heizeinrichtung der Versiegelungsvorrichtung kann dabei ein konduktives Heizelement, ein induktives Heizelement oder auch ein Ultraschall-Heizelement aufweisen. All die vorgenannten Heizelemente gewährleisten, dass ein sicheres und gleichmäßiges Aufsiegeln der Siegelmembran auf den Rand der Öffnung eines Bauteils gegeben ist.
Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Es zeigen:
- Figur 1:: ein Ausführungsbeispiel einer erfindungsgemäßen Trägerfolie, welche in eine erfindungsgemäße Versiegelungsvorrichtung eingelegt und nach einem erfindungsgemäßen Verfahren verarbeitbar ist, in einer seitlichen Ansicht,
- Figur 2:: eine Querschnittsdarstellung eines Ausführungsbeispiels einer erfindungsgemäßen Trägerfolie im Bereich einer Siegelmembran,
- Figur 3:: ein weiteres Ausführungsbeispiel einer erfindungsgemäßen Trägerfolie in einer Querschnittsdarstellung im Bereich einer Siegelmembran,
- Figur 4:: eine Querschnittsdarstellung eines Behälters, auf dessen Öffnung eine Trägerfolie mit einer Siegelmembran vor dem Verschweißen aufgelegt ist,
- Figur 5:: eine Querschnittsdarstellung des Behälters der Figur 4 nach dem eine Siegelmembran auf die Öffnung des Behälters aufgeschweißt wurde,
- Figur 6:: eine Querschnittsdarstellung eines Ausführungsbeispiels einer erfindungsgemäßen Versiegelungsvorrichtung in einer Detailansicht, wobei eine erfindungsgemäße Trägerfolie in die Versiegelungseinrichtung eingelegt ist,
- Figur 7:: ein Ausführungsbeispiel einer erfindungsgemäßen Versiegelungsvorrichtung mit eingelegter Trägerfolie in einer perspektivischen Ansicht,
- Figur 8:: eine Detaildarstellung der Versiegelungsvorrichtung der Figur 7 im Bereich einer Werkstückaufnahme,
- Figur 9:: eine weitere Detaildarstellung der erfindungsgemäßen Vorrichtung gemäß Figur 7 während des Aufsiegelns einer Siegelmembran auf eine Öffnung eines Bauteils und
- Figur 10:: die Versiegelungsvorrichtung der Figur 7 in einer Querschnittsdarstellung.

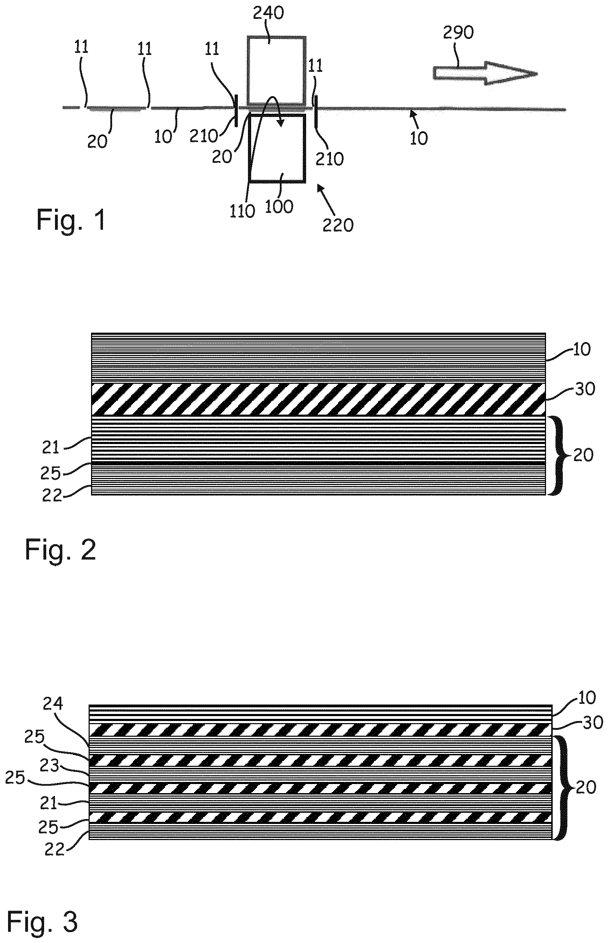

In der Figur 1 ist eine Trägerfolie 10 dargestellt, welche eine Vielzahl von Siegelmembranen 20 aufweist. Die Trägerfolie 10 wird dabei in Transportrichtung 290 geführt, wobei die Trägerfolie 10 mit einer Siegelmembran 20 in einer Werkstückaufnahme 220 eine Versiegelungsvorrichtung 200 über einer Öffnung 110 eines Bauteils 100 positioniert ist. Oberhalb des Bauteils 100 beziehungsweise seiner Öffnung 110 ist ein Versiegelungsstempel 240 der Versiegelungsvorrichtung 200 angeordnet. Damit die Siegelmembran exakt über dem Rand der Öffnung 110 des Bauteils 100 positionierbar ist, sind auf der Trägerfolie 10 Positionierungselemente 11 vorgesehen, in welche während des Versiegelungsprozesses Gegenpositionierungselemente 210 der Versiegelungsvorrichtung 200 eingreifen. Die Positionierungselemente 11 der Trägerfolie 10 sind dabei äquidistant beabstandet, wobei zwischen zwei einer Siegelmembran 20 zugeordneten Positionierungselementen 11, die zum Versiegeln der Öffnung 110 des Bauteils 100 zu verwendende Siegelmembran 20 angeordnet ist. In diesem Ausführungsbeispiel weist die Versiegelungsvorrichtung zwei Gegenpositionierungselemente 210 auf, welche in Positionierungselemente 11 eingreifen, die der unterhalb des Versiegelungsstempels 240 angeordneten, auf der Trägerfolie 10 haftenden Siegelmembran 20 zugeordnet sind. Vorliegend sind die Positionierungselemente 11 als einfache kreisrunde Löcher ausgebildet, in welche die Gegenpositionierungselemente 210, welche als konische Stifte ausgebildet sind, eingreifen. Durch diese spezielle Ausgestaltung der Positionierungselemente 11 und Gegenpositionierungselemente 210 ist es möglich, die auf der Trägerfolie 10 anhaftende Siegelmembran 20 zum Versiegeln der Öffnung 110 des Bauteils 100 exakt über den Rand der Öffnung 110 zu positionieren. Zum Versiegeln muss dann nur noch der Versiegelungsstempel 240 gegen den Rand der Öffnung 110 des Bauteils 100 gedrückt werden, wobei die Siegelmembran sich an dem Rand der Öffnung 110 des Bauteils exakt positioniert und während eines Heizvorgangs durch den Versiegelungsstempel 240 beziehungsweise eine dieser zugeordneten Heizeinrichtung 245 auf den Rand der Öffnung 110 exakt aufsiegelbar ist.

Nachdem die Öffnung 110 eines Bauteils versiegelt wurde, werden die Gegenpositionierungselemente 210 außer Eingriff mit den Positionierungselemente 11 gebracht, die Trägerfolie in Transportrichtung 290 weiter bewegt, bis eine weitere Siegelmembran 20 unterhalb des Versiegelungsstempels 240 angeordnet ist. Zum exakten Positionieren der Siegelmembran werden nun wiederum die Gegenpositionierungselemente 210 in Eingriff mit Positionierungselementen 11 gebracht, so dass ein weiterer Versiegelungsprozess einer Öffnung 110 eines Bauteils 100 erfolgen kann, sobald ein weiteres Bauteil 100 in der Werkstückaufnahme 220 positioniert ist.

Wie aus der Figur 1 deutlich ersichtlich ist, werden mittels der Trägerfolie 10 Siegelmembrane 20 von links zu der Verarbeitungsstelle zwischen den Gegenpositionierungselementen 210 und unterhalb des Versiegelungsstempels 240 befördert. Nachdem die Siegelmembran 20 auf eine Öffnung 110 eines Bauteils 100 aufgesiegelt wurde, enthält die abgeführte Trägerfolie 10 auf der rechten Seite dieser Darstellungen keine Siegelmembranen 20 mehr.

Figur 2 zeigt ein Ausführungsbeispiel einer erfindungsgemäßen Trägerfolie 10 im Bereich einer Siegelmembran 20 in einer Querschnittsdarstellung. Die Siegelmembran 20 ist dabei mittels eines Haftmittels 30 auf der Trägerfolie 10 aufgebracht beziehungsweise aufgeklebt, so dass ein einfaches und sicheres Handling der Siegelmembran 20 bzw. der Trägerfolie 10 möglich ist, ohne dass sich die Position der Siegelmembran 20 auf der Trägerfolie 10 verändert beziehungsweise sich die Siegelmembran 20 von der Trägerfolie löst. In dem vorliegenden Ausführungsbeispiel besteht die Siegelmembran 20 aus einer Membranschicht 21 und einer Siegelschicht 22, welche mittels eines Permanentklebers 25 dauerhaft miteinander verbunden sind. Das Haftmittel 30 zwischen Trägerfolie 10 und Siegelmembran 20 ist dabei als drucksensitiver Kleber ausgebildet, der im vorliegenden Fall ein Acrylkleber mit geringer Haftkraft ist, welcher bei einem Temperatureintrag durch den Versiegelungstempel 240 desorbiert und somit seine haftende beziehungsweise klebende Wirkung zwischen Trägerfolie 10 und Siegelmembran 20 verliert. Die Trägerfolie 10 kann nach dem Versiegeln ohne jegliche Haftwirkung gegenüber der Siegelmembran 20 weggeführt werden.

Die Trägerfolie 10 muss dabei der Siegeltemperatur kurzfristig standhalten. Deshalb ist dafür eine Polyesterträgerfolie, insbesondere aus Polyethylenterephthalat (PET), mit einer Dauergebrauchstemperatur von 422 K vorgesehen. Allerdings sind für die Trägerfolie 10 auch andere Materialen, beispielsweise alle erdenklichen Kunststoffe oder Elastomerfolien oder Metallfolien für eine höhere Temperaturbeständigkeit denkbar. Der Permanentklebstoff 25 zwischen Siegelschicht 22 und Membranschicht 21 ist vorliegend ebenfalls ein drucksensitiver Klebstoff auf Acryl- oder Elastomer-Basis, wobei allerdings die Eigenschaften während des Versiegelungsprozesses unverändert bleiben. Das heißt, dass der Permanentklebstoff 25 während eines Versiegelungsprozesses nicht desorbiert, sondern die Verbindung zwischen Siegelschicht 22 und Membranschicht 21 unverändert aufrechterhält. Während des Versiegelungsprozesses wird die Siegelschicht 22 durch den Hitzeeintrag angeschmolzen und verbindet sich somit mit dem Rand der Öffnung 110 des Bauteils 100, welches vorzugsweise aus einem Kunststoff, besonders bevorzugt aus einem Polymerkunststoff gebildet ist. In dem vorliegenden Ausführungsbeispiel ist das Bauteil 100 aus einem Cyclo-Olefin-Copolymer (COC) gebildet. Die Siegelschicht 22 besteht in diesem Ausführungsbeispiel aus LLDP (Linear Low Density Polyethen), welches sich besonders gut zur Verwendung als Siegellack zum Aufschmelzen auf ein Polymer eignet. Der Siegellack schmilzt während des Versiegelungsprozesses an beziehungsweise sogar auf den Rand der Öffnung 110 des Bauteils 100 auf, wobei der Rand 110 des Bauteils 100 beziehungsweise das Bauteil 100 selbst nicht aufschmelzen sollte, da es sich sonst verziehen kann. Allerdings sollte das Bauteil 100 gut erwärmt sein, damit sich die Polymerketten "verbinden" können. In den vorliegenden Ausführungsbeispielen wird das Bauteil 100 auf ca. 372 K bis 402 K erwärmt, wobei der Siegellack, dann wie vorgenannt beschrieben, aufschmilzt, wenn die Versiegelungstemperatur durch den Versiegelungsstempel 240 beziehungsweise einer diesem zugeordneten Heizeinrichtung 245 während des Versiegelungsprozesses eingebracht wird.

Die Figur 3 zeigt ein weiteres Ausführungsbeispiel einer erfindungsgemäßen Trägerfolie 10 im Bereich einer auf der Trägerfolie 10 angeordneten Siegelmembran 20, in einer Querschnittsdarstellung. Allerdings besteht die Siegelmembran 20 hierbei aus mehreren Schichten 21, 22, 23 und 24. Neben der Siegelschicht 22 und der Membranschicht 21 weist die Siegelmembran 20 dieses Ausführungsbeispiels noch eine farbgebende Schicht 23 und eine abschließende Kunststoffschicht 24 auf. Das Haftmittel 30 zwischen der aus PET bestehenden Trägerfolie 10 ist dabei zwischen der Trägerfolie 10 und der abschließenden Kunststoffschicht 24 angeordnet, wobei diese Kunststoffschicht 24 vorzugsweise ebenfalls aus PET besteht. Die einzelnen Schichten 21, 22, 23 und 24 der Siegelmembran 20 sind auch in diesem Ausführungsbeispiel wiederum mit einem Permanentklebstoff 25 miteinander verbunden, wobei der Permanentklebstoff während des Versiegelungsprozesses der eingebrachten Temperatur Stand hält, so dass die Verbindung zwischen den einzelnen Schichten auch nach dem Versiegeln der Öffnung 110 des Bauteils 100 gewährleistet ist.

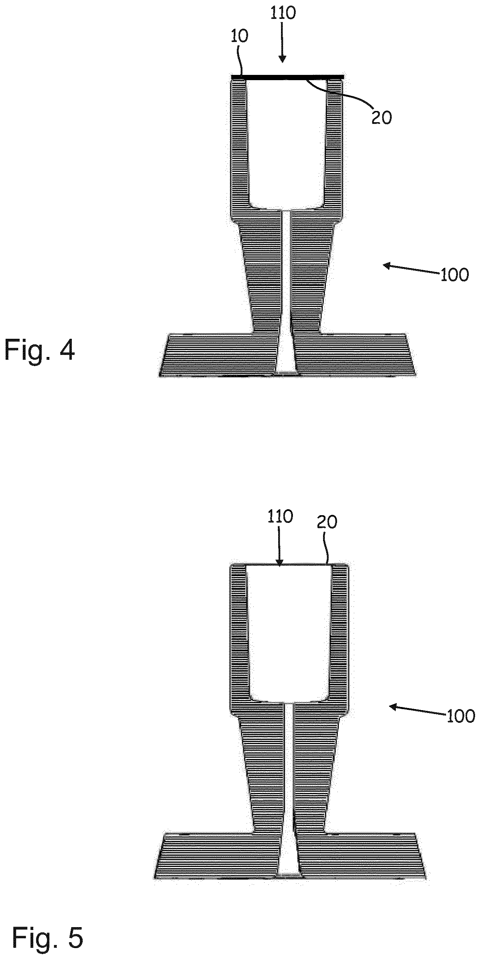

In der Darstellung der Figur 4 ist ein Bauteil 100 in einer Querschnittsdarstellung gezeigt, bei dem eine Trägerfolie 10 mit einer Siegelmembran 20 auf der Öffnung 110 des Bauteils 100 vor dem Versiegelungsprozess angeordnet ist.

Die Figur 5 zeigt das Bauteil 100 der Figur 4 nach dem Versiegelungsprozess. Deutlich zu erkennen ist, dass das nunmehr die Siegelmembran 20 auf der Öffnung 110 des Bauteils 100 angeordnet beziehungsweise aufgesiegelt ist, während die Trägerfolie 10 nicht mehr vorhanden ist. Das Bauteil 100 ist somit aus der Werkstückaufnahme 220 der Versiegelungsvorrichtung 200 entnommen und kann nun seinem bestimmungsgemäßen Gebrauch zugeführt werden.

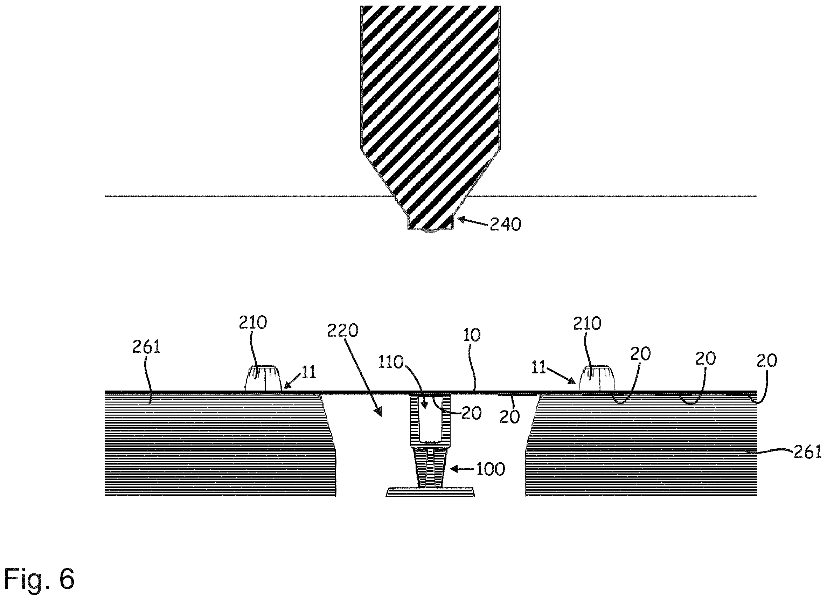

Figur 6 zeigt eine Querschnittsdarstellung der Versiegelungseinrichtung 200 im Bereich der Werkstückaufnahme 220, wobei eine Trägerfolie 10 mit einer Vielzahl von Siegelmembranen 20 von rechts nach links durch die Versiegelungseinrichtung geführt wird. Durch die Gegenpositionierungselemente 210 und die Positionierungselemente 11 ist eine Siegelmembran 20 der Trägerfolie 10 bereits über einer Öffnung 110 eines in der Werkstückaufnahme 220 befindlichen Bauteils 100 exakt positioniert. Zum abschließenden Versiegeln muss nun der Versiegelungsstempel 240 auf die Trägerfolie aufgepresst und erhitzt werden. Dabei wird die Siegelmembran 20 auf den Rand der Öffnung 110 des Bauteils 100 aufgesiegelt. Nachdem die Öffnung 110 des Bauteils 100 durch die Siegelmembran 20 versiegelt wurde, kann das Bauteil 100 aus der Werkstückaufnahme 220 entnommen werden. Dieses kann automatisiert erfolgen. Wobei gleichzeitig ein neues Bauteil 100 in der Werkstückaufnahme 220 positioniert wird. Die Entnahme des Bauteils 100 aus der Werkstückaufnahme 220 ist problemlos möglich, da aufgrund des durch den Temperatureintrag desorbierten Haftmittels 30 zwischen Trägerfolie 10 und Siegelmembran 20 keine Haftwirkung mehr zwischen Trägerfolie 10 und Siegelmembran 20 besteht.

Damit nun das neu in der Werkstückaufnahme 220 angeordnete Bauteil 100 beziehungsweise dessen Öffnung 110 versiegelt werden kann, werden die Gegenpositionierungselemente 210 außer Eingriff mit den Positionierungselementen 11 der Trägerfolie gebracht und eine neue Siegelmembran 20 oberhalb der Öffnung 110 des Bauteils 100 positioniert. Nachfolgend werden wiederum die Gegenpositionierungselemente 210 mit den Positionierungselementen 11 der nunmehr über dem Bauteil angeordneten Siegelmembran 20 in Eingriff gebracht, so dass eine exakte Positionierung dieser Siegelmembran 20 gegenüber der Öffnung 110 des Bauteils 100 gewährleistet ist, und ein weiterer Versiegelungsprozess erfolgen kann.

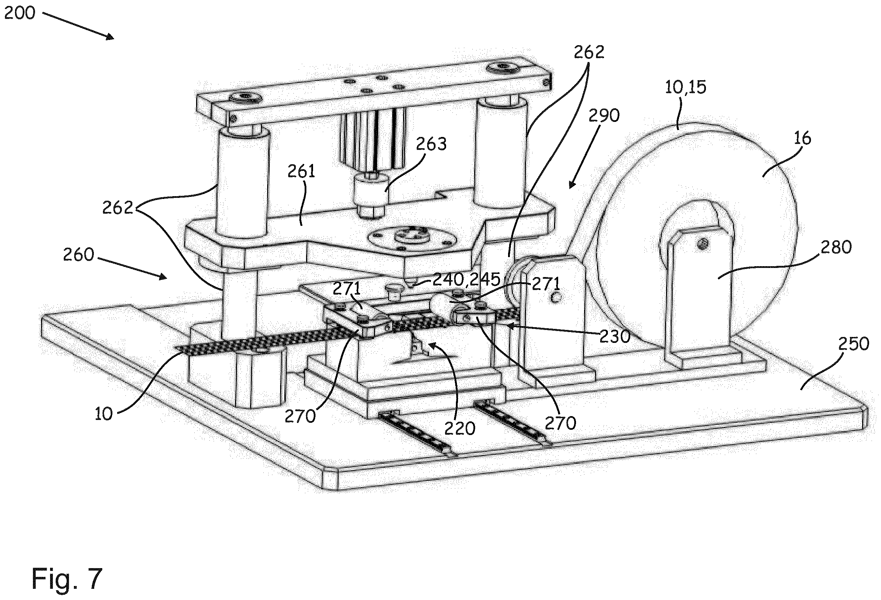

Figur 7 zeigt ein Ausführungsbeispiel einer erfindungsgemäßen Versiegelungsvorrichtung in einer perspektivischen Darstellung. Die gesamte Vorrichtung ist dabei auf einer Grundplatte 250 angeordnet. Die Versiegelungsvorrichtung 200 weist dabei eine Abwickeleinrichtung 280 für ein Band 15 einer Trägerfolie 10 auf, welches auf einer Spindel 16 aufgewickelt ist. Mittels einer hier nicht dargestellten Antriebseinrichtung wird die Trägerfolie 10 in Transportrichtung 290 über eine Zuführung 230 in Richtung einer Werkstückaufnahme 220 geführt. In der Werkstückaufnahme 220 ist ein Bauteil 100 positionierbar, dessen Öffnung 110 versiegelt werden soll. Die Versiegelungsvorrichtung 200 weist dazu eine Hubeinrichtung 260 auf, welche im Wesentlichen aus einem Hubtisch 261, einer Hubtischführung 262 und einem Hubzylinder 263 besteht. Mittels des Hubzylinders 263 ist der Versiegelungsstempel 240 der Versiegelungsvorrichtung 200 auf die Trägerfolie 10 zum Versiegeln einer Öffnung 110 eines in der Werkstückaufnahme 220 angeordneten Bauteils 10 absenkbar. Der Versiegelungsstempel 240 weist dabei zudem die Heizeinrichtung 245 auf, mittels welcher der Temperatureintrag in die Trägerfolie 10 und die Siegelmembran ermöglicht ist.

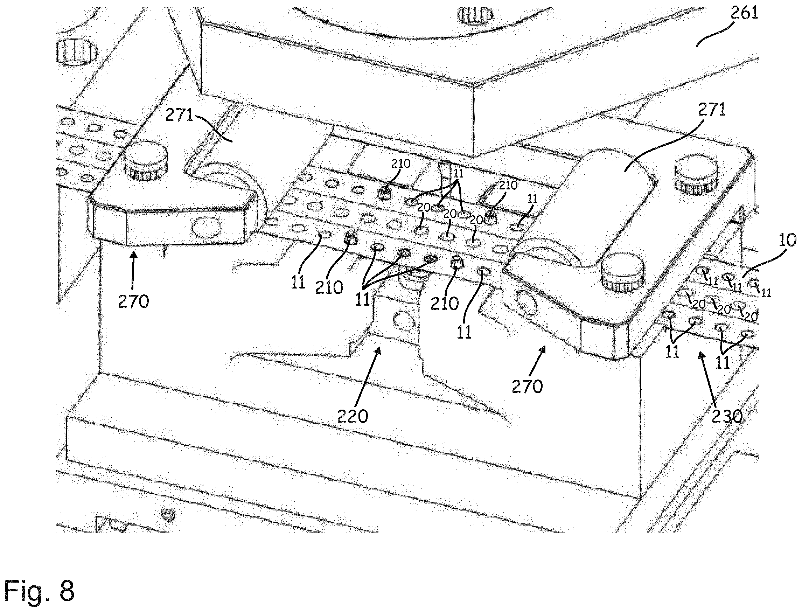

In der Figur 8 ist die Versiegelungsvorrichtung der Figur 7 in einer Detaildarstellung im Bereich der Werkstückaufnahme 220 gezeigt. Deutlich zu erkennen ist dabei eine Anpresseinrichtung 270, mit Anpressrollen 271, mittels welcher die Trägerfolie 10 in Richtung der Werkstückaufnahme abgesenkt werden kann, so dass die Gegenpositionierungselemente 210 in Eingriff mit den Positionierungselementen 11 der zu zur Versiegelung zu verwendenden Siegelmembran 20 gebracht werden können und somit wieder eine exakte Positionierung der Siegelmembran 20 gegeben ist, die nun verarbeitet werden soll. Vorliegend weist in diesem Ausführungsbeispiel jede Siegelmembran 20 vier Positionierungselemente 11 auf, die mit vier Positionierungselementen 210 der Versiegelungsvorrichtung 200 korrespondieren. Auch hierbei sind die Gegenpositionierungselemente 210 als konische Stifte ausgebildet, die in die als kreisrunde Öffnungen ausgebildeten Positionierungselemente 11 der Trägerfolie 10 eingreifen. Hierdurch ist ein exaktes Positionieren der Siegelmembran 20 über der Öffnung 110 eines in der Werkstückaufnahme 220 angeordneten Bauteils gewährleistet.

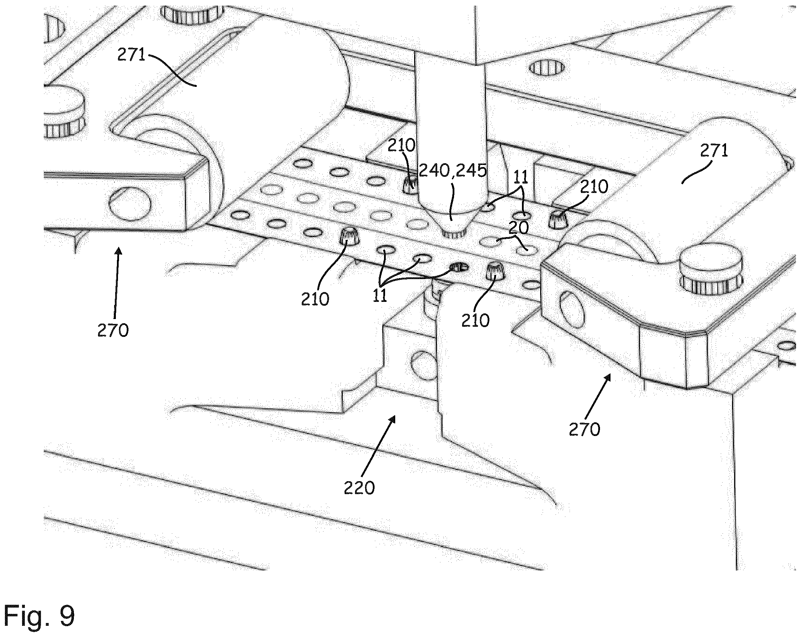

Während Figur 8 die Versiegelungsvorrichtung 200 zu dem Zeitpunkt zeigt, in dem die Anpresseinrichtung 270 die Gegenpositionierungselemente 210 und die Positionierungselemente 11 in Eingriff gebracht hat, zeigt Figur 9 nunmehr diesen Bereich während des Versiegelungsprozesses. Der Versiegelungsstempel 240 wurde mittels der Hubeinrichtung 260 auf die Trägerfolie 10 herabgesenkt und presst nunmehr die Siegelmembran 20 auf den Rand der Öffnung 110 des in der Werkstückaufnahme 220 angeordneten Bauteils 100. Zum Versiegeln wird nunmehr die Heizeinrichtung 245 aktiviert. Dies hat zum einen zur Folge, dass der Siegellack der Siegelschicht 22 auf beziehungsweise an den Rand der Öffnung 110 des Bauteils 100 an- beziehungsweise aufschmilzt und somit ein sicheres Versiegeln dieser Öffnung 110 gewährleistet. Zum anderen wird durch den Hitzeeintrag der Heizeinrichtung 245 das Haftmittel 30 zwischen Trägerfolie 10 und Siegelmembran 20 desorbiert, so dass keine Haftung zwischen Siegelmembran 20 und Trägerfolie 10 besteht. Werden nunmehr die Gegenpositionierungselemente 210 und Positionierungselemente 11 außer Eingriff gebracht, indem die Anpresseinrichtung 270 den Druck von der Trägerfolie 10 wegnimmt, geraten die Gegenpositionierungselemente 210 und Positionierungselemente 11 der Siegelmembran, welche gerade zum Versiegeln verwendet wurden, außer Eingriff und Trägerfolie 10 und Siegelmembran 20 lösen sich voneinander. Das versiegelte Bauteil kann nunmehr problemlos aus der Werkstückaufnahme entnommen werden.

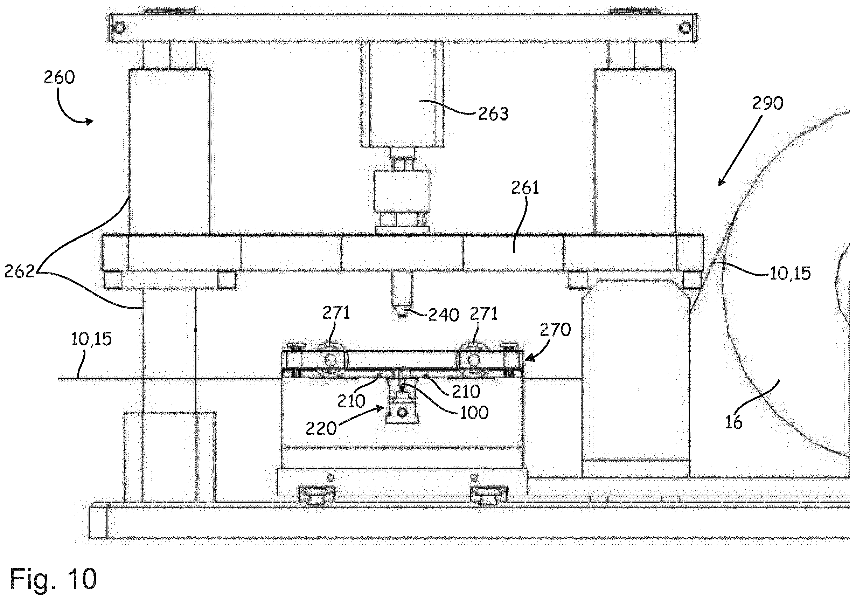

Um die Funktionsweise noch einmal zu verdeutlichen, ist in Figur 10 die erfindungsgemäße Vorrichtung der Figur 7 nochmals in einer Querschnittsdarstellung gezeigt, welche alle wesentlichen Elemente, die zum Versiegeln einer Öffnung 110 eines Bauteils 100 nötig sind, darstellt.

### Bezugszeichenliste

- 10: Trägerfolie
- 11: Positionierungselement
- 15: Band
- 16: Spindel
- 20: Siegelmembran
- 21: Membranschicht
- 22: Siegelschicht
- 23: farbgebende Schicht
- 24: Kunststoffschicht
- 25: Permanentklebstoff
- 30: Haftmittel
- 100: Bauteil
- 110: Öffnung
- 200: Versiegelungsvorrichtung
- 210: Gegenpositionierungselemente
- 220: Werkstückaufnahme
- 230: Zuführung
- 240: Versiegelungsstempel
- 245: Heizeinrichtung
- 250: Grundplatte
- 260: Hubeinrichtung
- 261: Hubtisch
- 262: Hubtischführung
- 263: Hubzylinder
- 270: Anpresseinrichtung
- 271: Anpressrollen
- 280: Abwickeleinrichtung
- 290: Transportrichtung

## Patentansprüche

1. Verfahren zum Versiegeln einer Öffnung (110) eines Bauteils (100) mit einer von einer Trägerfolie (10) lösbaren Siegelmembran (20) mit folgenden Verfahrensschritten:
a) Verfahren der Trägerfolie (10) über die Öffnung (110) des Bauteils (100), so dass die Siegelmembran (20) über der Öffnung (110) positioniert ist, wobei die Trägerfolie (10) Positionierungselemente (11) aufweist, welche zu entsprechenden Gegenpositionierungselementen (210) einer Versiegelungsvorrichtung (200) korrespondieren und durch welche die Trägerfolie (10) in der Versiegelungsvorrichtung (200) exakt zu der Öffnung (110) positionierbar ist,
b) Andrücken der Siegelmembran (20) auf den Rand der Öffnung (110),
c) Energieeintrag in die Trägerfolie (10) und die Siegelmembran (20),
d) Desorbieren eines zwischen der Trägerfolie (10) und der Siegelmembran angeordneten Haftmittels (30),
e) Verschmelzen eines Siegellacks der Siegelmembran (20) mit dem Rand der Öffnung (110) des Bauteils (110) und
f) Entfernen der Trägerfolie (10) von der Öffnung (110) des Bauteils (100).

2. Verfahren nach Anspruch 1,
**dadurch gekennzeichnet, dass**
der Energieeintrag über maximal zehn Sekunden erfolgt.

3. Verfahren nach Anspruch 1 oder 2,
**dadurch gekennzeichnet, dass**
der Energieeintrag mittels einer Heizeinrichtung (245), welche vorzugsweise konduktiv oder induktiv oder mit Ultraschall arbeitet, erfolgt.

4. Verfahren nach einem der vorhergehenden Ansprüche,
**dadurch gekennzeichnet, dass**
der Energieeintrag mittels eines Versiegelungsstempels (240) erfolgt, mit welchem die Siegelmembran (20) auf den Rand der Öffnung (110) des Bauteils (100) anpressbar ist.

5. Verfahren nach einem der vorhergehenden Ansprüche,
**dadurch gekennzeichnet, dass**
der Energieeintrag derart erfolgt, dass das zwischen Trägerfolie (10) und Siegelmembran (20) angeordnete Haftmittel (30) desorbiert, während der Siegellack der Siegelmembran (20) mit dem Rand der Öffnung (110) des Bauteils (100) verschmilzt.

6. Trägerfolie (10) mit wenigstens einer Siegelmembran (20), mit welcher eine Öffnung (110) eines Bauteils (100) versiegelbar ist,
**dadurch gekennzeichnet, dass**
die wenigsten eine Siegelmembran (20) mittels eines oberhalb einer Temperatur von 332 K desorbierenden Haftmittels (30) mit der Trägerfolie (10) verbunden ist, wobei die Trägerfolie (10) Positionierungselemente (11) aufweist, weiche zu entsprechenden Gegenpositionierungselementen (210) einer Versiegelungsvorrichtung (200) korrespondieren und durch welche die Trägerfolie (10) in der Versiegelungsvorrichtung (200) exakt zu der Öffnung (110) positionierbar ist.

7. Trägerfolie (10) nach Anspruch 6,
**dadurch gekennzeichnet, dass**
das Haftmittel (30) ein drucksensitiver Kleber, insbesondere ein Kleber auf Acryl- oder Elastomerbasis, ist.

8. Trägerfolie (10) nach einem der Ansprüche 6 oder 7,
**dadurch gekennzeichnet, dass**
die wenigstens eine Siegelmembran (20) eine Membranschicht (21), welche vorzugsweise aus Aluminium besteht, und eine Siegelschicht (22), welche vorzugsweise aus einem auf Polyoefinen basierenden Siegellack, insbesondere aus LLDP (Linear Low Density Polyethen) besteht, aufweist.

9. Trägerfolie (10) nach einem der Ansprüche 6 bis 8,
**dadurch gekennzeichnet, dass**
die wenigstens eine Siegelmembran (20) aus mehreren Schichten (21, 22, 23, 24) besteht, welche mittels eines zwischen den Schichten (21, 22, 23, 24) eingebrachten Permanentklebstoffes (25), der vorzugsweise ein Kleber auf Acryl- oder Elastomerbasis ist, zu der Siegelmembran (20), welche vorzugsweise eine Membranschicht (21), eine Siegelschicht (22), eine farbgebende Schicht (23) und eine abschließende Kunststoffschicht (24) aufweist, verklebt sind.

10. Trägerfolie (10) nach einem der Ansprüche 6 bis 9,
**dadurch gekennzeichnet, dass**
sie aus einem Metall oder Kunststoff, insbesondere aus einem Elastomer, bevorzugt aus Polyester, besonders bevorzugt aus PET (Polyethylenterephthalat), besteht und eine Dicke zwischen 10 µm und 110 µm, insbesondere zwischen 35 µm und 85 µm, bevorzugt von 60 µm aufweist.

11. Trägerfolie (10) nach einem der Ansprüche 6 bis 10,
**dadurch gekennzeichnet, dass**
sie eine Dauergebrauchstemperatur von wenigstens 322 K, bevorzugt von wenigstens 422 K und eine Kurzzeit Gebrauchstemperatur von bis zu 442 K, bevorzugt von über 422 K, aufweist.

12. Versiegelungsvorrichtung (200) zum Versiegeln wenigstens einer Öffnung (110) eines Bauteils (100), von der eine Trägerfolie (10) nach einem der nach Ansprüche 6 bis 11 mit einem Verfahren nach einem der Ansprüche 1 bis 5 verarbeitbar ist, die Folgendes aufweist:
eine Werkstückaufnahme (220) für Bauteile (30),
eine Zuführung (230) für die Trägerfolie (10),
einen Versiegelungsstempel (240), durch welchen eine auf der Trägerfolie (10) angeordnete Siegelmembran (20) auf einem Rand (120) einer Öffnung (110) eines Bauteils (100) zum Versiegeln der Öffnung (110) anordnenbar ist,
einer dem Versiegelungsstempel (240) zugeordnete Heizeinrichtung(245), mittels welcher die Trägerfolie (10) aufheizbar ist,
und **dadurch gekennzeichnet, dass**
sie Gegenpositionierungselemente aufweist, welche zu den Positionierungselementen der Trägerfolie korrespondieren, wodurch die Trägerfolie in der Versiegelungsvorrichtung exakt zu der Öffnung positionierbar ist,
und dadurch, dass der Zuführung (230) für die Trägerfolie (10) eine Anpresseinrichtung (270) zugeordnet ist, mit welcher die Positionierunqselemente (11) der Trägerfolie (10) in oder an den Geqenpositionierunqselementen (210) anordenbar sind.

13. Versiegelungsvorrichtung (200) nach Anspruch 12,
**dadurch gekennzeichnet, dass**
sie eine Grundplatte (250), auf der eine Hubeinrichtung (260) angeordnet ist, aufweist, wobei der Hubeinrichtung ein Hubtisch (261), eine Hubtischführung (262) und ein Hubzylinder (263) zugeordnet ist und der Hubzylinder (263) dazu ausgebildet ist, mit dem an der Unterseite des Hubtisches (261) angeordneten Versieglungsstempel (240) die Trägerfolie (10) mit einer Siegelmembran (20) auf eine Öffnung (110) eines in der Werkstückaufnahme (220) positionierten Bauteils (100) zu drücken.

14. Versiegelungsvorrichtung (200) nach Anspruch 12 oder 13,
**dadurch gekennzeichnet, dass**
die Zuführung (230) eine Abwickeleinrichtung (280) aufweist, auf welcher eine Spindel (16) mit einem Band (15) der Trägerfolie (10) anordnenbar ist.

15. Versiegelungsvorrichtung (200) nach einem der Ansprüche 12 bis 14,
**dadurch gekennzeichnet, dass**
die Heizeinrichtung (245) ein konduktives Heizelement oder ein induktives Heizelement oder ein Ultraschall-Heizelement aufweist.

## Claims

1. Method for sealing an opening (110) of a component (100) by means of a sealing membrane (20) that can be detached from a carrier film (10), comprising the following method steps:
a) moving the carrier film (10) over the opening (110) of the component (100) such that the sealing membrane (20) is positioned over the opening (110), wherein the carrier film (10) comprises positioning elements (11) which correspond to corresponding mating positioning elements (210) of a sealing apparatus (200) and by means of which the carrier film (10) can be positioned, in the sealing apparatus (200), precisely relative to the opening (110),
b) pressing the sealing membrane (20) onto the edge of the opening (110),
c) applying energy to the carrier film (10) and the sealing membrane (20),
d) desorbing an adhesive agent (30) arranged between the carrier film (10) and the sealing membrane,
e) fusing a sealing wax of the sealing membrane (20) with the edge of the opening (110) of the component (100), and
f) removing the carrier film (10) from the opening (110) of the component (100).

2. Method according to claim 1,
**characterised in that**
the energy is applied over a maximum of ten seconds.

3. Method according to either claim 1 or claim 2,
**characterised in that**
the energy is applied by means of a heating device (245) that preferably operates conductively or inductively or ultrasonically.

4. Method according to any of the preceding claims,
**characterised in that**
the energy is applied by a sealing stamp (240), by means of which the sealing membrane (20) is loadable onto the edge of the opening (110) of the component (100).

5. Method according to any of the preceding claims,
**characterised in that**
the energy is applied such that the adhesive agent (30) arranged between the carrier film (10) and the sealing membrane (20) desorbs, whilst the sealing wax of the sealing membrane (20) fuses with the edge of the opening (110) of the component (100).

6. Carrier film (10) comprising at least one sealing membrane (20), by means of which an opening (110) of a component (100) is sealable,
**characterised in that**
the at least one sealing membrane (20) is connected to the carrier film (10) by means of an adhesive agent (30) that desorbs above a temperature of 332 K, the carrier film (10) comprising positioning elements (11) which correspond to corresponding mating positioning elements (210) of a sealing apparatus (200) and by means of which the carrier film (10) can be positioned, in the sealing apparatus (200), precisely relative to the opening (110).

7. Carrier film (10) according to claim 6,
**characterised in that**
the adhesive agent (30) is a pressure-sensitive adhesive, in particular an acryl-based or elastomer-based adhesive.

8. Carrier film (10) according to either claim 6 or claim 7,
**characterised in that**
the at least one sealing membrane (20) comprises a membrane layer (21) that preferably consists of aluminum, and a sealing layer (22) that preferably consists of a polyolefin-based sealing wax, in particular of LLDP (Linear Low Density Polyethylene).

9. Carrier film (10) according to any of claims 6 to 8,
**characterised in that**
the at least one sealing membrane (20) consists of a plurality of layers (21, 22, 23, 24) which are adhesively bonded by means of a permanent adhesive (25) which is inserted between the layers (21, 22, 23, 24) and is preferably an acryl-based or elastomer-based adhesive, so as to form the sealing membrane (20), which preferably comprises a membrane layer (21), a sealing layer (22), a colouring layer (23) and a final plastics layer (24).

10. Carrier film (10) according to any of claims 6 to 9,
**characterised in that**
it consists of a metal or plastics material, in particular an elastomer, preferably polyester, particularly preferably PET (polyethylene terephthalate), and has a thickness of between 10 µm and 110 µm, in particular between 35 µm and 85 µm, preferably 60 µm.

11. Carrier film (10) according to any of claims 6 to 10,
**characterised in that**
it has a long-term service temperature of at least 322 K, preferably of at least 422 K, and a short-term service temperature of up to 442 K, preferably above 422 K.

12. Sealing apparatus (200) for sealing at least one opening (110) of a component (100), by means of which apparatus a carrier film (10) according to any of claims 6 to 11 can be processed by means of a method according to any of claims 1 to 5 and which comprises the following:
a work piece holder (220) for components (30),
a feed (230) for the carrier film (10),
a sealing stamp (240), by means of which a sealing membrane (20) arranged on the carrier film (10) can be arranged on an edge (120) of an opening (110) of a component (100) in order to seal the opening (110),
a heating device (245) which is associated with the sealing stamp (240) and by means of which the carrier film (10) can be heated,
and **characterised in that**
it comprises mating positioning elements which correspond to the positioning elements of the carrier film, as a result of which the carrier film can be positioned, in the sealing apparatus, precisely relative to the opening,
and **in that**
the feed (230) for the carrier film (10) is associated with a pressing device (270) by means of which the positioning elements (11) of the carrier film (10) can be arranged in or on the mating positioning elements (210).

13. Sealing apparatus (200) according to claim 12,
**characterised in that**
it comprises a base plate (250) on which a lifting device (260) is arranged, the lifting device being associated with a lifting table (261), a lifting table guide (262) and a lifting cylinder (263), and the lifting cylinder (263) being designed to press the carrier film (10) having a sealing membrane (20) onto an opening (110) of a component (100) positioned in the work piece holder (220) by means of the sealing stamp (240) arranged on the underside of the lifting table (261).

14. Sealing apparatus (200) according to either claim 12 or claim 13,
**characterised in that**
the feed (230) comprises an unwinding device (280) on which a spindle (16) having a tape (15) of the carrier film (10) can be arranged.

15. Sealing apparatus (200) according to any of claims 12 to 14,
**characterised in that**
the heating device (245) comprises a conductive heating element or an inductive heating element or an ultrasound heating element.

## Revendications

1. Procédé de scellement d'une ouverture (110) d'un élément de construction (100) par une membrane de scellement (20) détachable d'une feuille de support (10), comportant les étapes de procédé suivantes :
a) disposition de la feuille de support (10) sur l'ouverture (110) de l'élément de construction (100), de telle sorte que la membrane de scellement (20) est positionnée sur l'ouverture (110), la feuille de support (10) présentant des éléments de positionnement (11) lesquels correspondent à des contre-éléments de positionnement (210) correspondants d'un dispositif de scellement (200) et au moyen desquels la feuille de support (10) est positionnable exactement par rapport à l'ouverture (110) dans le dispositif de scellement (200) ;
b) pressage de la membrane de scellement (20) sur le bord de l'ouverture (110);
c) apport d'énergie dans la feuille de support (10) et la membrane de scellement (20);
d) désorption d'un adhésif (30) disposé entre la feuille de support (10) et la membrane de scellement (20) ;
e) fusion d'un vernis de scellement de la membrane de scellement (20) avec le bord de l'ouverture (110) de l'élément de construction (100) ; et
f) retrait de la feuille de support (10) de l'ouverture (110) de l'élément de construction (100).

2. Procédé selon la revendication 1,
**caractérisé par le fait que**
l'apport d'énergie a lieu pendant dix secondes au maximum.

3. Procédé selon l'une des revendications 1 ou 2,
**caractérisé par le fait que**
l'apport d'énergie a lieu au moyen d'un dispositif de chauffage (245), lequel fonctionne de préférence par conduction ou induction ou par ultrasons.

4. Procédé selon l'une des revendications précédentes,
**caractérisé par le fait que**
l'apport d'énergie a lieu au moyen d'un poinçon de scellement (240), avec lequel la membrane de scellement (20) est pressable sur le bord de l'ouverture (110) de l'élément de construction (100).

5. Procédé selon l'une des revendications précédentes,
**caractérisé par le fait que**
l'apport d'énergie a lieu de telle sorte que l'adhésif (30) disposé entre la feuille de support (10) et la membrane de scellement (20) se désorbe, pendant que le vernis de scellement de la membrane de scellement (20) fusionne avec le bord de l'ouverture (110) de l'élément de construction (100).

6. Feuille de support (10) comportant au moins une membrane de scellement (20), avec laquelle une ouverture (110) d'un élément de construction (100) est scellable,
**caractérisée par le fait que**
la au moins une membrane de scellement (20) est liée à la feuille de support (10) au moyen d'un adhésif (30) se désorbant au-dessus d'une température de 332K, à l'occasion de quoi la feuille de support (10) présente des éléments de positionnement (11) lesquels correspondent à des contre-éléments de positionnement (210) correspondants d'un dispositif de scellement (200) et au moyen desquels la feuille de support (10) est positionnable exactement par rapport à l'ouverture (110) dans le dispositif de scellement (200).

7. Feuille de support (10) selon la revendication 6,
**caractérisée par le fait que**
l'adhésif (30) est une colle sensible à la pression, en particulier une colle à base acrylique ou élastomère.

8. Feuille de support (10) selon l'une des revendications 6 ou 7,
**caractérisée par le fait que**
la au moins une membrane de scellement (20) présente une couche de membrane (21), laquelle de préférence est composée d'aluminium, et une couche de scellement (22), laquelle de préférence est composée d'un vernis de scellement à base de polyoléfines, en particulier de LLDP (Linear Low Density Polyethen).

9. Feuille de support (10) selon l'une des revendications 6 à 8,
**caractérisée par le fait que**
la au moins une membrane de scellement (20) consiste de plusieurs couches (21, 22, 23, 24), lesquelles sont collées au moyen d'une colle permanente (25), qui de préférence est une colle à base acrylique ou élastomère, introduite entre les couches (21, 22, 23, 24), à la membrane de scellement (20), laquelle de préférence présente une couche de membrane (21), une couche de scellement (22), une couche colorante (23) et une couche de matière plastique finale (24).

10. Feuille de support (10) selon l'une des revendications 6 à 9,
**caractérisée par le fait que**
elle consiste d'un métal ou d'une matière plastique, en particulier d'un élastomère, de préférence de polyester, de façon particulièrement préférée de PET (poly(téréphtalate d'éthylène)) et présente une épaisseur entre 10 µm et 110 µm, en particulier entre 35 µm et 85 µm, de préférence de 60 µm.

11. Feuille de support (10) selon l'une des revendications 6 à 10,
**caractérisée par le fait que**
elle présente une température d'utilisation continue d'au moins 322K, de préférence d'au moins 422K et une température d'utilisation en temps court allant jusqu'à 442K, de préférence de plus de 422K.

12. Dispositif de scellement (200) pour le scellement d'au moins une ouverture (110) d'un élément de construction (100) dont une feuille de support (10) selon l'une des revendications 6 à 11 est apte à être traitée par un procédé selon l'une des revendications 1 à 5,
qui présente ce qui suit :
un logement de pièce (220) pour des éléments de construction () ;
une alimentation (230) pour la feuille de support (10) ;
un poinçon de scellement (240), au moyen duquel une membrane de scellement (20) disposée sur la feuille de support (10) est apte à être disposée sur un bord (120) d'une ouverture (110) d'un élément de construction (100) pour le scellement de l'ouverture (110) ;
un dispositif de chauffage (245) associé au poinçon de scellement (240), au moyen duquel la feuille de support (10) est apte à être chauffée
et **caractérisé par le fait que**
il présente des contre-éléments de positionnement, lesquels correspondent aux éléments de positionnement de la feuille de support, ce par quoi la feuille de support est positionnable dans le dispositif de scellement exactement par rapport à l'ouverture, et **par le fait qu'**un dispositif de pressage (270) est associé à l'alimentation (230) pour la feuille de support (10), avec lequel les éléments de positionnement (11) de la feuille de support (10) sont aptes à être disposés dans ou sur les contre-éléments de positionnement (210).

13. Dispositif de scellement (200) selon la revendication 12,
**caractérisé par le fait que**
il présente une plaque de base (250), sur laquelle est disposé un dispositif élévateur (260), une table élévatrice (261), un guide de table élévatrice (262) et un vérin de levage (263) étant associés au dispositif d'élévation et le vérin de levage (263) étant conçu de façon à presser avec le poinçon de scellement (240) disposé sur le côté inférieur de la table élévatrice (261), la feuille de support (10) avec une membrane de scellement (20) sur une ouverture (110) d'un élément de construction (100) positionné dans le logement de pièce (220).

14. Dispositif de scellement (200) selon l'une des revendications 12 ou 13
**caractérisé par le fait que**
l'alimentation (230) présente un dispositif de dévidage (280), sur lequel une broche (16) est apte à être disposée avec une bande (15) de la feuille de support (10).

15. Dispositif de scellement (200) selon l'une des revendications 12 à 14,
**caractérisé par le fait que**
le dispositif de chauffage (245) présente un élément de chauffage par conduction ou un élément de chauffage par induction ou un élément de chauffage par ultrasons.
